# EUROPÄISCHE PATENTANMELDUNG

(11) **EP 0 687 084 A2**
(43) Veröffentlichungstag der Anmeldung: **13.12.1995**
(21) Anmeldenummer: 95810331.9
(22) Anmeldetag: 19.05.1995
(51) Int. Cl.: H04J 3/16

(54) **Kommunikationsvorrichtung mit variabler Bandbreite**

(30) Priorität: 06.06.1994 CH 1774/94
(71) Anmelder: Gesellschaft für Prüftechnik und mobile Kommunikation mbH, D-15234 Frankfurt (Oder) (DE)
(72) Erfinder: Richter, Lutz P., D-15232 Frankfurt (Oder) (DE)
(74) Vertreter: Roshardt, Werner Alfred, Dipl.-Phys.

(57) **Zusammenfassung**

Bei einem Verfahren für die Punkt-zu-Punkt-Kommunikation werden sowohl die Uebertragungskanäle als auch deren Bandbreiten flexibel von Fall zu Fall festgelegt. Eine Teilnehmerstation (13.1, ..., 13.6), die von der Zentrale (12) eine Verbindung mit einer weiteren Teilnehmerstation (13.1, ..., 13.6) anfordert, gibt die für die aufzubauende Kommunikationsverbindung benötigte Bandbreite an. Die Zentrale ermittelt einen freien Kanal der gewünschten Bandbreite und reserviert diesen für die eine Kommunikationsverbindung. Nach Beendigung der Kommunikationsverbindung wird der reservierte Frequenzbereich für die Nutzung durch andere freigegeben. Die zur Verfügung stehenden Kapazitäten werden auf diese Weise dynamisch und optimal genutzt.

## Beschreibung

### Technisches Gebiet

Die Erfindung betrifft ein Verfahren für die Punkt-zu-Punkt-Kommunikation in einem System mit mehreren Teilnehmerstationen und einer Zentrale, bei welchem die Zentrale beim Erstellen einer Kommunikationsverbindung innerhalb fest vorgegebener Systembandbreiten einen jeweils freien Uebertragungskanal ermittelt und zuweist. Ferner betrifft die Erfindung eine Einrichtung zur Durchführung des Verfahrens.

### Stand der Technik

Für die digitale Kommunikation sind in jüngster Zeit äusserst leistungsfähige Breitbandkommunikationssysteme erstellt worden. So erlaubt beispielsweise das ISDM-Konzept die parallele Uebertragung von digitalisierter Sprache und Daten, wobei das Kommunikationssystem selbst nicht zwischen den Signalquellen (Telefon, Computer) zu unterscheiden braucht. Da die konventionelle Telefonleitung für derartige Datenübertragung nicht geeignet ist, muss in der Regel eine neue Verkabelung erstellt werden.

Neben diesen "globalen" Kommunikationssystemen gibt es auch lokale, die eine hausinterne Vernetzung bieten. In der Regel sind diese Systeme jedoch sehr spezifisch auf die Computerkommunikation ausgelegt.

Für einfache Steuerungs- und Ueberwachungsaufgaben sind natürlich keine Breitbandsysteme erforderlich. Im Elektrizitätsbereich genügt beispielsweise das Stromverteilnetz. Es ist z. B. bekannt, Fernwirkungsaufgaben mit spezifisch störunanfälligen Kommunikationssystemen direkt über das Stromverteilungsnetz auszuführen.

In jüngster Zeit sind sogar Versuche unternommen worden, um das Kabelfernsehnetz für die zusätzliche Uebertragung einfacher Steuersignale einzusetzen.

### Darstellung der Erfindung

Aufgabe der Erfindung ist es, ein Verfahren der eingangs genannten Art anzugeben, das sowohl zur Uebertragung von einfachen Steuersignalen als auch für die schnelle Datenkommunikation geeignet ist und dabei die zur Verfügung stehenden Systembandbreiten möglichst effizient nutzt. Vorzugsweise soll mit dem Verfahren die Kommunikation auf bereits bestehenden Breitbandkommunikationsträgern möglich sein.

Gemäss der Erfindung besteht die Lösung darin, dass der Uebertragungskanal entsprechend den verbindungsspezifischen Erfordernissen fallweise mit einer von mehreren verschiedenen Uebertragungsbandbreiten ausgestattet wird.

Der Kerngedanke besteht also darin, dass nicht nur die Uebertragungskanäle (z. B. die Uebertragungsfrequenz), sondern auch die Uebertragungsbandbreiten flexibel festgelegt werden. Eine Kommunikationsverbindung soll also nicht mehr "Platz" beanspruchen, als unbedingt nötig ist. Auf die erfindungsgemässe Weise kann mit einem System in flexibler Weise im einen Extremfall eine grosse Anzahl schmalbandiger Verbindungen und im anderen Extremfall eine kleine Zahl breitbandiger Verbindungen bedient werden.

Vorzugsweise legt die Zentrale die Uebertragungsbandbreite auf Anforderung einer Verbindung durch eine rufende Teilnehmerstation fest. D. h., die rufende Teilnehmerstation meldet der Zentrale vor dem Verbindungsaufbau die gewünschte Grösse der Bandbreite. Die Zentrale sucht dann innerhalb der Systembandbreiten einen freien Bereich geeigneter Grösse und teilt ihn für die geforderte Verbindung zu. Nach Beendigung der Verbindung wird der entsprechende Frequenzbereich wieder freigegeben. In einem derartigen System ist es also möglich, dass eine Teilnehmerstation fähig ist, sowohl Schmalbandige als auch breitbandige Verbindungen aufzubauen bzw. zu bedienen. Es ist natürlich auch denkbar, dass eine Teilnehmerstation immer nur mit einer bestimmten Bandbreite arbeitet, wobei am System unterschiedliche Typen von Teilnehmerstationen angeschlossen sind. im letztgenannten Fall kann die Zentrale bereits durch Feststellen der Identität der rufenden Teilnehmerstation die richtige Bandbreite eruieren (z. B. durch Auslesen einer Teilnehmertabelle).

Vorzugsweise ist die Systembandbreite in einen Raster von Schmalbandkanälen aufgeteilt. Wird eine Uebertragungsbandbreite angefordert, die grösser als der elementare Raster ist, dann werden eine Vielzahl von Schmalbandkanälen vorübergehend zusammengefasst und einer konkreten Verbindung en bloc zugeordnet. Eine Systembandbreite von beispielsweise 25 MHz wird in einen 20 oder 25 KHz-Raster aufgeteilt. Ein einzelner Schmalbandkanal von 20 - 25 KHz reicht dann gerade für Uebertragung von Audiosignalen. Durch Zusammenfassen von 4 oder 5 Schmalbandkanälen kann z. B. ein 100 KHz-Kanal erstellt werden.

Vorzugsweise ist mindestens ein Uebertragungskanal als Steuerkanal fest vorgegeben. Er dient zur Ueberwachung und Kontrolle der aufzubauenden und laufenden Verbindungen. Ueber diesen Kanal können die Teilnehmerstationen an die Zentrale und umgekehrt gelangen.

Gemäss einer besonders bevorzugten Ausführungsform läuft die Kommunikation in zwei getrennten Systembandbreiten ab, wobei in einer ersten Systembandbreite die Zentrale sendet und die Teilnehmerstationen nur empfangen und in einer zweiten Systembandbreite die Teilnehmerstationen nur senden und die Zentrale empfängt. Auf diese Weise ist eine zwei-Weg- Kommunikation (Duplex-Betrieb) möglich, und zwar frei von Problemen der Echounterdrückung. Damit zwei Teilnehmerstationen direkt miteinander kommunizieren können, ist ein sogenannter Transverter vorgesehen, der die von einer Teilnehmerstation ausgesendeten Signale in denjenigen Frequenzbereich überträgt, in welchem die andere Teilnehmerstation empfängt.

Vorzugsweise synchronisiert die Zentrale alle Teilnehmerstationen. Dies kann über einen von mehreren Steuerkanälen erfolgen. Weiter ist es von Vorteil, wenn die Uebertragung von Signalen mit einem Zeitschlitzverfahren erfolgt. Eine Teilnehmerstation kann dann mit geringem Aufwand gleichzeitig unterschiedliche Signale (digitalisierte Sprache, Steuerungssignale und schnelle Datenübertragung quasi )parallel übertragen.

Vorzugsweise läuft der Aufbau einer Verbindung so ab, dass eine erste Teilnehmerstation via Steuerkanal der Zentrale die zu vermittelnde zweite Teilnehmerstation und die gewünschte Bandbreite mitteilt, dass die Zentrale einen freien Uebertragungskanal der gewünschten Bandbreite ermittelt und dann die zweite Teilnehmerstation aufruft. Ist die zweite Teilnehmerstation empfangsbereit, so ist die gewünschte Punkt-zu-Punkt-Verbindung erstellt. Nach Beendigung der Daten- bzw. Signalübertragung informiert die erste Teilnehmerstation die Zentrale und der entsprechende Uebertragungskanal wird zur anderweitigen Verwendung wieder freigegeben.

Wenn die Signalübertragung in zwei Systembandbreiten, d. h. gleichsam richtungsgetrennt erfolgt, dann können Sende- und Empfangsfrequenzen einer zwei-Weg-Verbindung jeweils entsprechend den zur Verfügung stehenden Kapazitäten in flexiblem, nicht a priori vorgegebenem Abstand zueinander festgelegt werden.

Es ist nicht zwingend erforderlich, dass eine zwei-Weg- Verbindung symmetrisch ist. Es ist durchaus auch denkbar, dass die Bandbreite in der einen Richtung grösser als diejenige in der anderen Richtung ist. Dies könnte beispielsweise dann von Vorteil sein, wenn in eine Richtung grosse Datenmengen übertragen werden müssen und die Kommunikation in der anderen Richtung sich auf Empfangsbestätigungs- und Korrektursignale beschränkt.

Das erfindungsgemässe Kommunikationsverfahren eignet sich insbesondere für die Daten- und Signalübertragung via rückwärtstauglichem Breitbandkabelnetz für Kabelfernsehen.

Zur Durchführung des Verfahrens werden Teilnehmerstationen mit variabel einstellbaren Sende- und Empfangsfrequenzen sowie variierbaren und daher flexibel einstellbaren Bandbreiten benötigt. Als Uebertragungssystem zwischen den Teilnehmerstationen und der Zentrale wird mit Vorteil ein bereits bestehendes Kabelfernsehnetz verwendet. Derartige Netze sind in der Regel von relativ beschränkter Ausdehnung. Um ein System grösserer Reichweite zu erhalten, kann die Zentrale (z. B. via Glasfaserkabel) mit einer oder mehreren Zentralen anderer lokaler Kabelnetze verbunden sein. Die Kommunikation zwischen den Zentralen verschiedener Zellen wird in der Regel nicht nach dem erfindungsgemässen Prinzip ablaufen (da die verschiedenen Zentralen nicht alle am selben Kommunikationsmedium angehängt, sondern direkt miteinander verbunden sein werden).

Läuft die Kommunikation innerhalb einer Zelle in zwei Systembandbreiten quasi richtungsgetrennt ab, dann ist - wie bereits erwähnt - eine sogenannte Transverterschaltung erforderlich. Sie ist mit Vorteil in der Zentrale integriert und überträgt breitbandig die Signale aus dem Rückwärtsbereich (d. h. aus dem Bereich, in dem Teilnehmerstationen Signale aussenden) in den Vorwärtsbereich (in welchem die Zentrale sendet und die Teilnehmerstationen empfangen).

Vorzugsweise umfasst die Teilnehmerstation eine am Breitbandkabelnetz angeschlossene Anschalteinheit und eine mit dieser drahtlos in Verbindung stehende Eingabeeinheit. Die Eingabeeinheit ist z. B. mit Tastatur und Display ausgerüstet, um Dienstleistungen wie Home-shopping, Home-banking, Video-on-demand und dergleichen in Anspruch nehmen zu können. Katalogseiten und Videofilme werden auf dem Bildschirm eines ebenfalls vorhandenen Fernsehgeräts angezeigt. Für die Identifikation kann die Eingabeeinheit zusätzlich mit einem Kartenleser ausgestattet sein.

Gemäss einer besonders bevorzugten Ausführungsform verfügt die Anschalteinheit über einen Computeranschluss, der für eine schnelle digitale Datenübermittlung transparent ist. D. h., ein Computer kann über ein geeignetes Interface mit einem an irgend einer anderen Anschalteinheit angeschlossenen zweiten Computer Daten austauschen, ohne dass die Computer die dazwischen liegenden Anschalteinheiten "sehen". In diesem Sinn wird auf ein Protokoll zwischen den Anschalteinheiten und den Computerinterfaces verzichtet.

Als Ausgabegeräte für Bildinformation können die am Breitbandkabelnetz ohnehin angeschlossenen Fernsehgeräte verwendet werden. Fernseh- und Kommunikationssignale stören sich nicht, da die ersteren bekanntlich in einem Bereich von deutlich über 100 MHz und die letzteren gemäss der Erfindung in einem Bereich von deutlich unter 100 MHz übertragen werden.

Die Teilnehmerstationen, insbesondere die Anschalteinheiten sind mit Vorteil für die simultane Uebertragung von analogen Audiosignalen und digitalen Daten ausgebildet.

Aus der Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Nachfolgend soll die Erfindung anhand von Ausführungsbeispielen und im Zusammenhang mit den Zeichnungen näher erläutert werden. Es zeigen:
- Fig. 1: eine schematische Darstellung der erfindungsgemässen Verwaltung und Belegung der Frequenzen und Bandbreiten;
- Fig. 2: eine schematische Darstellung des zwei-Weg- Konzepts mit getrenntem Vorwärts- und Rückwärtsbereich;
- Fig. 3: eine schematische Darstellung eines erfindungsgemässen Netzwerkes;
- Fig. 4: ein allgemeines Blockschaltbild einer erfindungsgemässen Anschalteinheit;
- Fig. 5: ein allgemeines Blockschaltbild einer erfindungsgemässen Eingabeeinheit.

### Wege zur Ausführung der Erfindung

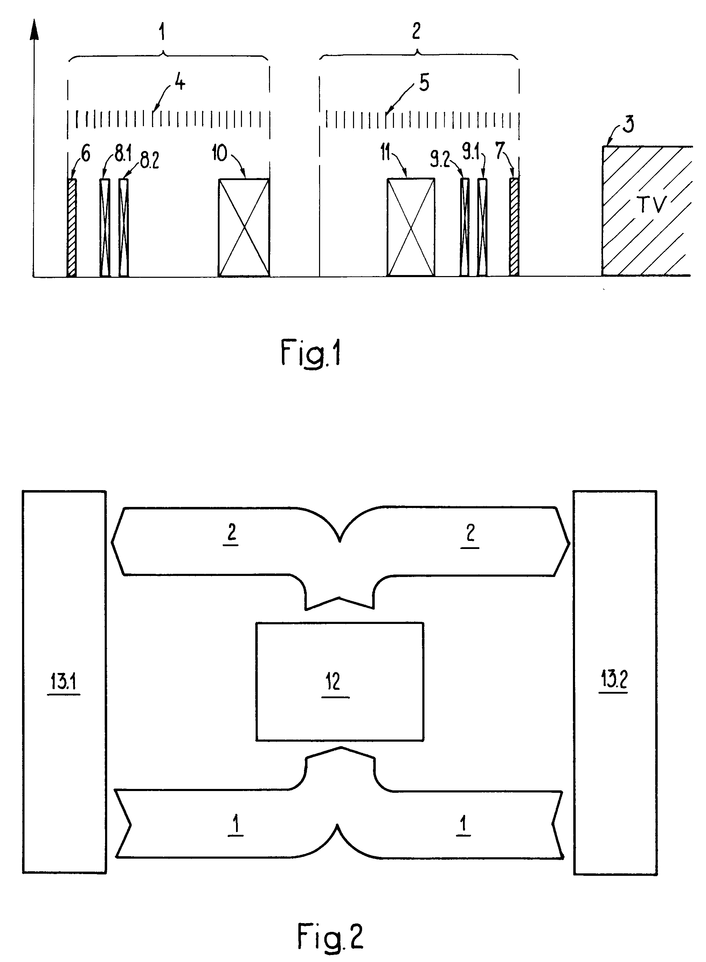

Fig. 1 veranschaulicht das Wesen der Erfindung im Frequenzbereich. Ein sogenannter Rückwärtsbereich 1, in welchem die Teilnehmerstationen Signale an die Zentrale senden, erstreckt sich z. B. über eine Systembandbreite von 25 MHz, beginnend bei 5 MHz. Ein sogenannter Vorwärtsbereich 2, in welchem die Teilnehmerstationen Signale von der Zentrale resp. von anderen Teilnehmerstationen empfangen, erstreckt sich ebenfalls über eine Systembandbreite von z. B. 25 Hz, jedoch beginnend bei z. B. 60 MHz. Vorwärts- und Rückwärtsbereich 2 resp. 1 sind also deutlich voneinander getrennt. In einem frequenzmässig weit höheren Bereich ist in an sich bekannter Weise ein TV-Bereich 3 angesiedelt. Es handelt sich um den standardmässig für die Uebertragung von Fernsehsignalen reservierten Bereich.

Rückwärts- und Vorwärtsbereich 1 resp. 2 sind jeweils in einen Kanalraster 4, 5 von z. B. 20 oder 25 KHz aufgeteilt. Es stehen also jeweils maximal 1'000 - 1'250 Schmalbandkanäle zur Verfügung. Erfindungsgemäss sind nun aber nicht nur schmalbandige, sondern auch breitbandige Kommunikationsverbindungen möglich. Eine feste Aufteilung in schmalbandige und breitbandige Kommunikationsverbindungen ist jedoch nicht vorgesehen. Vielmehr werden die zur Verfügung stehenden Kapazitäten fallweise entsprechend den jeweiligen Bedürfnissen alloziert.

In Fig. 1 sind beispielsweise je zwei Schmalbandkanäle 8.1, 8.2 und 9.1, 9.2 sowie je ein Breitbandkanal 10 und 11 dargestellt. Die Breitbandkanäle 10, 11 sind durch Zusammenfassen einer Vielzahl von Schmalbandkanälen für eine bestimmte Verbindung gebildet. Werden die Breitbandkanäle 10, 11 nicht mehr benötigt (d. h. wird die entsprechende Verbindung beendet) dann wird der entsprechende Frequenzbereich freigegeben. Da in ständig wechselnder Weise schmalbandige und breitbandige Verbindungen erstellt und abgebrochen werden, und da die zur Verfügung stehenden Frequenzbereiche dynamisch zugewiesen werden, ändert sich im Laufe der Zeit die Zahl und Platzierung der Schmal- und Breitbandkanäle fortlaufend.

Die Allokation der Kapazitäten wird von einer Zentrale durchgeführt, die über z. B. zwei Steuerkanäle 6, 7 mit den Teilnehmerstationen ständig kommuniziert. Ueber den im Vorwärtsbereich 2 angesiedelten Steuerkanal 7 werden beispielsweise Synchronisationssignale ausgesendet und über den im Rückwärtsbereich 1 angesiedelten Steuerkanal 6 können die Teilnehmerstationen die Zentrale rufen, wenn sie eine Verbindung mit einer anderen Teilnehmerstation wünschen.

Fig. 2 veranschaulicht den Informationsfluss. Eine Zentrale 12 sendet bzw. übermittelt im Vorwärtsbereich 2 Signale und Daten an alle am Netzwerk angeschlossenen Teilnehmerstationen 13.1, 13.2. Letztere senden bzw. übertragen Signale und Daten im Rückwärtsbereich 1 an die Zentrale 12. Es ist dabei nicht nur vorgesehen, dass die Zentrale 12 die von den Teilnehmerstationen 13.1, 13.2 eingegangenen Daten bearbeitet, sondern auch dass sie jene unbearbeitet in den Vorwärtsbereich 2 überträgt (transvertiert), so dass die Teilnehmerstationen 13.1, 13.2 (zumindest virtuell) direkt miteinander kommunizieren können.

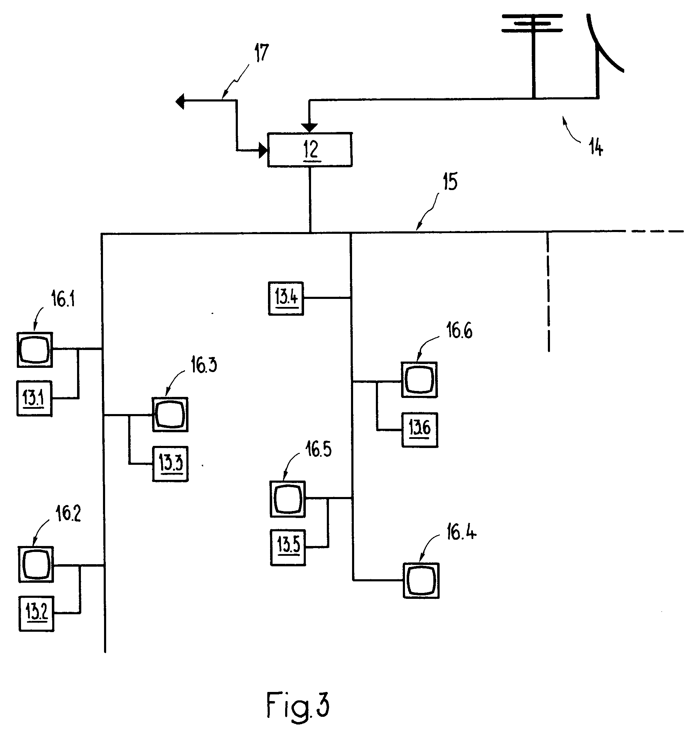

Fig. 3 zeigt eine schematische Darstellung einer erfindungsgemässen Kommunikationsanlage auf der Basis eines Breitbandkabelnetzes 15. Der an sich bekannte, d. h. konventionelle Teil der Anlage umfasst eine Antennenanlage 14 für den Empfang von Fernsehsignalen, welche über eine Zentrale 12 in das (lokale) Breitbandkabelnetz 15 eingespeist werden. Es sind Anschlüsse für Fernsehgeräte 16.1, ..., 16.6 vorgesehen. Bei den Fernsehgeräten 16.1, ..., 16.6 handelt es sich um handelsübliche Geräte.

Neu sind gewisse Teile der Zentrale 12 und die am Breitbandkabelnetz 15 anschliessbaren Teilnehmerstationen 13.1, ..., 13.6. Letztere sind z. B. zusammen mit dem Fernsehgerät über einen T-Stecker am Breitbandkabelnetz 15 angeschlossen. Selbstverständlich kann eine Teilnehmerstation (z. B. 13.4) auch ohne Fernsehgerät funktionieren. Ebenso wird es natürlich auch Anschlüsse geben, die nur in konventioneller Weise genutzt sind (z. B. Fernsehgerät 16.4).

Die Zentrale 12 ist ferner über eine schematisch angedeutete Fernverbindung 17 mit anderen lokalen Netzen verbunden.

Im folgenden sollen die verschiedenen Möglichkeiten der Kommunikation beispielhaft erleutert werden.

### Beispiel 1:

Die Teilnehmerstation 13.2 möchte mit der Teilnehmerstation 13.5 in Verbindung treten, um eine grosse Menge von Daten zu übertragen (File-Transfer). Sie ruft deshalb über den Steuerkanal die Zentrale 12 und gibt ihr die Zieladresse (Teilnehmerstation 13.5) und die erforderliche Bandbreite (z. B. 300 KHz) bekannt. Die Zentrale 12 ermittelt, in welchem Bereich der Systembandbreite ein Uebertragungskanal der gewünschten Kapazität zur Verfügung steht. Können die erforderlichen Kapazitäten im Moment nicht bereitgestellt werden oder ist die gewünschte Teilnehmerstation 13.5 im Moment besetzt, teilt sie dies der Teilnehmerstation 13.2 mit. Hat sie jedoch eine geeignete Trägerfrequenz ermitteln können, so ruft sie die Teilnehmerstation 13.5 und signalisiert, dass die Teilnehmerstation 13.2 auf der gefundenen Frequenz und mit der geforderten Bandbreite eine Verbindung aufbauen will. Ist die Teilnehmerstation 13.5 bereit, signalisiert sie dies der Zentrale 12, welche dann den erstellten Breitbandkanal den beiden Teilnehmerstationen 13.2 und 13.5 zur Verfügung stellt.

Beide Teilnehmerstationen 13.2, 13.5 stellen ihren Empfangsteil auf die zugewiesene Frequenz und die entsprechende Bandbreite ein. Nun kann die schnelle Datenübertragung durchgeführt werden. Die Zentrale 12 ist an der Uebertragung nur insoweit beteiligt, als sie mit ihrem Transverter die im Rückwärtsbereich von der Teilnehmerstation 13.2 gesendeten Daten inhaltlich unverändert in den Vorwärtsbereich überträgt, in welchem die Teilnehmerstation 13.5 empfängt.

Ist die Datenübertragung beendet, teilt die Teilnehmerstation 13.2 dies der Zentrale 12 mit, welche den entsprechenden Frequenzbereich zur anderweitigen Benutzung wieder frei gibt.

Es ist zu beachten, dass im vorliegenden Fall die Zentrale stets einen umfassenden Ueberblick (aktive Teilnehmerstationen, zugewiesene Frequenzen, beanspruchte Frequenzbänder etc.) über die laufenden Verbindungen hat.

### Beispiel 2:

Die Teilnehmerstation 13.4 möchte mit einer Teilnehmerstation ausserhalb des Netzes in Verbindung treten. Sie meldet die Nummer der gesuchten Teilnehmerstation und die gewünschte Bandbreite der Zentrale 12 mit, welche ihrerseits über die Fernverbindung 17 mit derjenigen Zentrale Kontakt aufnimmt, in deren Wirkbereich die gesuchte Teilnehmerstation ist. Die weiteren Schritte zum Aufbauen der Verbindung laufen sinngemäss zu Beispiel 1 ab, jedoch mit dem Unterschied, dass die Kommunikation über die zwei genannten Zentralen läuft. Davon braucht die Teilnehmerstation 13.4 jedoch nichts zu merken. Sie kann in gleicher Weise agieren und reagieren, wie wenn die gesuchte Teilnehmerstation im selben lokalen Netz wäre.

### Beispiel 3:

Von der Station 13.5 aus soll Home-Shopping durchgeführt werden. Die Teilnehmerstation 13.5 ruft die Zentrale 12 und teilt ihr die Nummer der Shopping-Zentrale und die Bandbreite (Schmalbandkommunikation) mit. Ueber die Fernverbindung 17 wird die Zentrale 12 mit der Shopping-Zentrale in Verbindung treten. (Die Shopping-Zentrale kann im Prinzip auch als Teilnehmerstation des lokalen Netzwerks gestaltet sein.) Der elektronische Katalog kann entweder per Antenne ausgetrahlt werden, so dass er über die Antennenanlage 14 empfangen werden kann, oder die entsprechenden Katalogseiten können via Fernverbindung 17 zugänglich gemacht werden. Angezeigt wird der elektronische Katalog auf dem Fernsehgerät 16.5. Ueber die Teilnehmerstation 13.5 werden Steuersignale (Wahl der anzuzeigenden Seiten, Auswahl eines Produkts, Bestätigung eines Kaufs etc.) übermittelt.

Weitere Nutzungen der erfindungsgemässen Anlage sind z. B. generelle Fernwirkungs- oder Fernüberwachungsaufgaben, Telefonverbindungen etc..

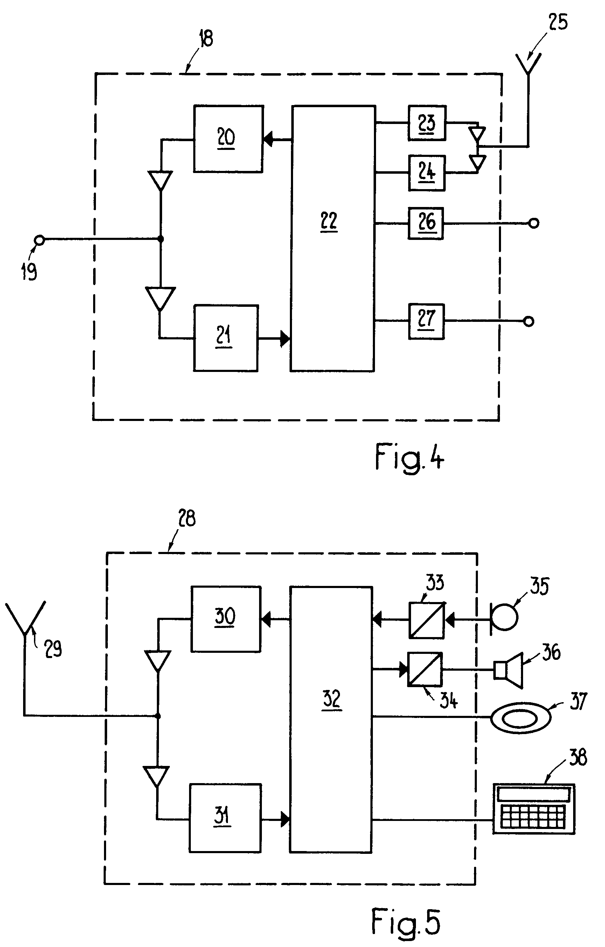

Fig. 4 zeigt ein grobes Blockschaltbild einer erfindungsgemässen Anschalteinheit 18. Ueber einen Koaxialanschluss 19 ist die Anschalteinheit 18 mit dem Breitbandkabelnetz 15 verbunden. In einer oberen Systembandbreite von z. B. 60 - 85 MHz treffen Signale ein, die von einem RF-Empfänger 21 demoduliert werden. Die demodulierten Signale werden einer Steuer- und Verarbeitungsschaltung 22 weitergegeben.

Zu übermittelnde Daten und Signale werden von der Steuer- und Verarbeitungsschaltung 22 einem RF-Sender 20 zugeführt, der ein Sendesignal in der unteren Systembandbreite von z. B. 5 - 30 MHz erzeugt und via Koaxialanschluss 19 in das Breitbandkabelnetz einkoppelt.

Sowohl RF-Sender 20 als auch RF-Empfänger 21 sind nicht nur auf beliebige Frequenzen innerhalb der jeweiligen Systembandbreite abstimmbar, sondern auch mit in ihrer Bandbreite variablen Modulatoren resp. Demodulatoren ausgerüstet.

Die Steuer- und Verarbeitungsschaltung 22 kann über einen Sender 23, einen Empfänger 24 und eine Antenne 25 mit einer Eingabeeinheit (vgl. Fig. 5) drahtlos kommunizieren (der Funkkontakt zwischen Anschalteinheit 18 und Eingabeeinheit kann in konventionellen Bahnen verlaufen und hat nichts mit der erfindungsgemässen Kommunikation im Breitbandkabelnetz 15 zu tun). Weiter ist ein Interface 26 für einen schnellen Datenaustausch und ein RF-232-Interface 27 vorgesehen. Das Interface 26 ermöglicht den Anschluss eines Computers für einen schnellen File-Transfer. Das RS 232-Interface kann z. B. für Fernwirkungsaufgaben eingesetzt werden.

Die Steuer- und Verarbeitungsschaltung 22 umfasst z. B. einen Transfercontroller für die Durchführung des Datentransfers, einen Controller und einen Speicher zur Durchführung des erfindungsgemässen Kommunikationsverfahrens. Hardwaremässig basiert die Anschalteinheit 18 auf an sich bekannten Komponenten (PU-Schaltung, FM- resp. FSK-Modulatoren und Demodulatoren, Mikrocomputer etc). Verwirklicht wird das Verfahren durch fest abgespeicherte Programme. Aus diesem Grund erübrigt sich ein vertieftes Eingehen auf die schaltungsmässigen Details.

Fig. 5 zeigt ein grobes Blockschaltbild einer Eingabeeinheit 28. Ueber eine Antenne 29 steht sie in Funkkontakt mit der Anschalteinheit 18. Eine Steuer- und Verarbeitungsschaltung 32 bedient eine Senderschaltung 30 und wird bedient von einer Empfängerschaltung 31. Ueber ein Mikrofon 35, dessen Analogsignal mit einem A/D-Wandler 33 digitalisiert wird, können Sprachsignale eingegeben werden. Ein D/A-Wandler 34 mit anschliessendem Lautsprecher 36 ermöglicht die Sprachausgabe. Mikrofon 35 und Lautsprecher 36 können zum Telefonieren verwendet werden, wobei die entsprechende zwei-Weg-Verbindung im Sinne der Erfindung über das Breitbandkabelnetz 15 läuft. Ein Tongenerator 37 kann zur Erzeugung eines Klingelzeichens angeregt werden (Signalisierung eines Anrufes). Schliesslich ist gemäss einer bevorzugten Ausführungsform ein alphanumerisches Eingabegerät 38 vorgesehen. Es wird für Datenbankabfragen, Home-Banking, Home-Shopping etc. verwendet.

Dadurch, dass Anschalteinheit 18 und Eingabeeinheit 28 drahtlos miteinander in Verbindung stehen, kann die Anschalteinheit 18 in der Nähe des Kabelanschlusses plaziert werden und mit der Eingabeeinheit von irgendwo her im Raum bedient werden.

Vorzugsweise verfügt die Anschalteinheit 18 zusätzlich über einen NF-Eingang. (Telefonanschluss mit Analogsignalübertragung).

Die erfindungsgemässe Kommunikationsanlage erlaubt eine transparente Datenübermittlung mit z. B. 64 KBit/s, eine Sprachübermittlung mit 3,1 KHz und eine Uebermittlung von Datenpaketen im Steuerkanal. Für die Datenübertragung bis 9,6 KBit/s können in an sich bekannter Weise die NF- oder RS-232-Schnittstellen verwendet werden. Für höhere Datenraten können NF- und RS-232-Schnittstellen als Steuerkanal der (transparenten) Datenübertragung dienen.

Bevorzugte Modulationsarten sind FM für Schmalbandsteuerkanäle und FSK für transparente Hochgeschwindigkeitsübertragungen.

Die Funkverbindung zwischen der Anschalteinheit 18 und der Eingabeeinheit 28 sind im GHz-Bereich angesiedelt (ähnlich zu DECT und anderen Inhouse-Anwendungen).

Die Anschalteinheit kann sowohl als eigenständiges Gerät als auch als Bestandteil eines Fernsehapparates gestaltet sein. Sie kann z. B. Tuner und Decoder des Fernsehers steuern oder abfragen und so Funktionen für ein Pay-TV-System wahrnehmen.

Durch die Verwendung eines Zeitschlitzverfahrens (TDMA = Time Division Multiple Access) können von einer Einheit mehrere Verbindungen parallel bedient werden (Zeitmultiplexing). Die Anwendung anderer Vielfachzugriffsverfahren (wie z. B. CDMA = Code Division Multiple Access, FDMA = Frequency Division Multiple Access) ist nicht ausgeschlossen. Die strenge Trennung im Frequenzbereich ist z. B. bei CDMA-Verfahren nicht erforderlich.

Indem DECT- bzw. E-Netz-ähnliche Protokolle zwischen Anschalteinheit und Fernbedienung (Eingabeeinheit) eingesetzt werden, können Handfunktelefone, die für den Einsatz im E-Netz bestimmt sind, als Mobilteil zur Anschalteinheit verwendet werden, wobei die Anschalteinheit quasi die Basisstation darstellt. Mit einer einzigen Telefonnummer kann man dann z. B. sowohl zu Hause über das Kabel als auch per Mobilfunk telefonieren.

Die Erfindung beschränkt sich also nicht auf die beschriebenen Ausführungsbeispiele. Ihre zentrale Eigenschaft besteht in der Flexibilität und der Effizienz bei der Nutzung bestehender resp. vorgegebener Uebertragungskapazitäten.

## Patentansprüche

1. Verfahren für die Punkt-zu-Punkt-Kommunikation in einem System mit mehreren Teilnehmerstationen (13.1, ..., 13.6) und einer Zentrale (12), bei welchem die Zentrale (12) beim Erstellen einer Kommunikationsverbindung innerhalb fest vorgegebener Systembandbreiten (1, 2) einen jeweils freien Uebertragungskanal ermittelt und zuweist, dadurch gekennzeichnet, dass der Uebertragungskanal (8.1, 8.2, 10) entsprechend den verbindungsspezifischen Erfordernissen fallweise mit einer von mehreren verschiedenen Uebertragungsbandbreiten ausgestattet wird.

2. Verfahren nach Anspruch 1, dadurch gekennzeichnet, dass die Zentrale (12) die Uebertragungsbandbreite (8.1, 8.2, 10) entsprechend den Angaben einer eine Kommunikationsverbindung anfordernden Teilnehmerstation (13.1, ..., 13.6) festlegt.

3. Verfahren nach einem der Ansprüche 1 oder 2, dadurch gekennzeichnet, dass die Systembandbreiten (1, 2) in einen Raster (4, 5) von Schmalbandkanälen aufgeteilt werden und dass beim Erstellen einer Kommunikationsverbindung je nach Bedarf mehrere Schmalbandkanäle zu einem Uebertragungs-Kanal grösserer Uebertragungsbandbreite (10) zusammengefasst werden.

4. Verfahren nach einem der Ansprüche 1 bis 3, dadurch gekennzeichnet, dass mindestens ein Uebertragungskanal (6, 7) fest vorgegeben wird für die Ueberwachung und Kontrolle der aufzubauenden und laufenden Kommunikationsverbindungen.

5. Verfahren nach einem der Ansprüche 1 bis 4, dadurch gekennzeichnet, dass die Teilnehmerstationen (13.1, ..., 13.6) von der Zentrale synchronisiert werden.

6. Verfahren nach einem der Ansprüche 1 bis 5, dadurch gekennzeichnet, dass für die Kommunikationsverbindungen zwei getrennte Systembandbreiten (1, 2) verwendet werden, wobei in einer ersten Systembandbreite (2) die Zentrale (12) sendet und die Teilnehmerstationen (13.1, ..., 13.6) empfangen und in einer zweiten Systembandbreite (1) die Teilnehmerstationen (13.1, ..., 13.6) senden und die Zentrale (12) empfängt.

7. Verfahren nach einem der Ansprüche 3 bis 6, dadurch gekennzeichnet, dass die Systembandbreiten weniger als 100 MHz, insbesondere etwa 25 MHz oder weniger betragen und dass sie in einen Raster (4, 5) von 25 KHz oder weniger aufgeteilt werden.

8. Verfahren nach einem der Ansprüche 1 bis 7, dadurch gekennzeichnet, dass die Uebertragung von Signalen mit einem Zeitschlitzverfahren erfolgt.

9. Verfahren nach einem der Ansprüche 1 bis 8, dadurch gekennzeichnet, dass zum Aufbauen einer Kommunikationsverbindung eine erste Teilnehmerstation (13.2) via Steuerkanal (6) der Zentrale (12) die zu vermittelnde zweite Teilnehmerstation (13.5) und eine gewünschte Bandbreite mitteilt, die Zentrale (12) einen freien Uebertragungskanal der gewünschten Bandbreite ermittelt und die zweite Teilnehmerstation (13.5) ruft.

10. Verfahren nach einem der Ansprüche 6 bis 9, dadurch gekennzeichnet, dass die Zentrale (12) Sende- und Empfangsfrequenzen einer zwei-Weg-Verbindung entsprechend den zur Verfügung stehenden Kapazitäten in flexiblem, nicht a priori vorgegebenem Abstand zueinander festlegt.

11. Verfahren nach einem der Ansprüche 1 bis 10, dadurch gekennzeichnet, dass für die Signalübertragung ein rückwärtstaugliches Breitbandkabelnetz, insbesondere wie es für die Verteilung von TV-Signalen verwendet wird, benützt wird.

12. Einrichtung zur Durchführung des Verfahrens nach einem der Ansprüche 1 bis 11 mit einer Zentrale (12) zur Ueberwachung der Kommunikationsverbindungen und einer Mehrzahl von Teilnehmerstationen (13.1, ..., 13.6), dadurch gekennzeichnet, dass die Teilnehmerstationen (13.1, ..., 13.6) über Sende- und Empfangseinheiten mit flexibel einstellbarer Bandbreite verfügen.

13. Einrichtung nach Anspruch 12, dadurch gekennzeichnet, dass die Teilnehmerstationen (13.1, ..., 13.6) mit der Zentrale (12) und untereinander durch ein rückwärtstaugliches Breitbandkabelnetz verbunden sind.

14. Einrichtung nach Anspruch 13, dadurch gekennzeichnet, dass am Breitbandkabelnetz (15) eine Transverterschaltung angeschlossen ist, welche innerhalb einer ersten Systembandbreite (1) von den Teilnehmerstationen (13.1, ..., 13.6) ausgesendete Signale breitbandig in eine zweite Systembandbreite (2) übersetzt.

15. Einrichtung nach einem der Ansprüche 13 oder 14, dadurch gekennzeichnet, dass die Teilnehmerstationen (13.1, ..., 13.6) eine am Breitbandkabelnetz (15) angeschlossene Anschalteinheit (18) und eine mit dieser drahtlos in Verbindung stehende Eingabeeinheit (28) umfasst.

16. Einrichtung nach einem der Ansprüche 13 bis 15, dadurch gekennzeichnet, dass die Anschalteinheit (18) über einen Computeranschluss (26) verfügt, der für eine schnelle digitale Datenübertragung transparent ist.

17. Einrichtung nach einem der Ansprüche 13 bis 16, dadurch gekennzeichnet, dass am Breitbandkabelnetz (15) als Ausgabegeräte Fernsehgeräte (16.1, ..., 16.6) angeschlossen sind, welche über separate Kanäle Fernsehsignale empfangen und verarbeiten.

18. Einrichtung nach einem der Ansprüche 12 bis 17, dadurch gekennzeichnet, dass die Teilnehmerstationen (13.1, ..., 13.6) für die simultane Uebertragung von analogen Audiosignalen, Steuersignalen und/oder digitalen Daten ausgebildet sind.
